# EUROPÄISCHE PATENTSCHRIFT

(11) **EP 1 440 835 B1**
(45) Veröffentlichungstag und Bekanntmachung des Hinweises auf die Patenterteilung: **09.11.2005**
(21) Anmeldenummer: 03001461.7
(22) Anmeldetag: 22.01.2003
(51) Int. Cl.: B60K 25/06

(54) **Angetriebenes Zusatzelement an einem Kraftfahrzeug**
Auxiliary drive for a vehicle
Entraînement auxiliaire pour un véhicule automobile

(43) Veröffentlichungstag der Anmeldung: 28.07.2004
(73) Patentinhaber: Ponte Vecchio Consult Sagl, 6600 Muralto (CH)
(72) Erfinder: Schübler, Hans Hubert, 45479 Mülheim an der Ruhr (DE)
(74) Vertreter: Cohausz & Florack

(56) Entgegenhaltungen:
- DE-U- 20 214 999
- US-A- 2 766 628

## Beschreibung

Die Erfindung betrifft ein Zusatzelement für ein Kraftfahrzeug, insbesondere Lastkraftwagen, mit den Merkmalen des Oberbegriffes des Anspruches 1.

Lastkraftwagen müssen neben den für Kraftfahrzeuge allgemein üblichen Vorrichtungen häufig noch mit Versorgungsaggregaten wie etwa Kompressoren, Pumpen, Hydraulikpumpen oder Generatoren ausgerüstet werden. Derartige Vorrichtungen sind beispielsweise für das Be- und Entladen des Lastkraftwagens notwendig und werden bevorzugt von dem Motor des Lastkraftwagens mechanisch angetrieben.

Insbesondere bei Sattelschleppern ergibt sich das Problem, dass der Raum an dem Chassis der Zugmaschine für das Anbringen derartiger Zusatzelemente eng begrenzt ist. Der Raum oberhalb des Chassis hinter der Fahrerkabine wird von dem Auflieger eingenommen, so dass an dieser Stelle keine Zusatzelemente angebracht werden können. Der einzig verbleibende Raum ist der unterhalb des Chassis zwischen der Vorder- und der Hinterachse. Allerdings ist bedingt durch den kurzen Radstand sowie die mittig verlaufende Antriebswelle für die Hinterachse auch hier nur vergleichsweise wenig Platz. Verstärkt wird das Platzproblem, wenn die Hinterachse der Zugmaschine als Zwillingsachse ausgeführt ist, was der Fall ist, wenn das zulässige Gesamtgewicht des Sattelzuges bei über 40 Tonnen liegt.

Aus der US 5,563,451 ist bekannt, einen Abtriebsflansch des Getriebes direkt mit der Antriebsflansch eines Generators über eine Gelenkwelle zu verbinden. Eine solche Gelenkwelle ermöglichst es, das Zusatzelement schwingungstechnisch von dem Rest des Fahrzeugs zu entkoppeln.

Bei dem Einsatz von Gelenkwellen ist es aber zwingend erforderlich, dass bestimmte Randbedingungen eingehalten werden, da sich sonst die Lebensdauer der Gelenkwellen drastisch reduziert. Insbesondere ist darauf zu achten, dass der sogenannte Beugungswinkel der Gelenkwelle in Abhängigkeit von der Drehzahl einen bestimmten Wert nicht überschreitet.

Aus dieser winkelbedingten Randbedingung ergibt sich, dass ein Mindestabstand zwischen dem Abtriebsflansch und dem Antriebsflansch in Richtung der Drehachse des Antriebsflansches, also in der Regel in Fahrtrichtung des Fahrzeugs, festgelegt ist. Dieser Mindestabstand führt aber häufig zu Konflikten mit dem zur Verfügung stehenden Platz unterhalb des Chassis.

Ein Zusatzelement, das unterhalb des Chassis einer Sattelzugmaschine angeordnet werden kann, ist aus der gattungsgemäßen DE 202 14 999 U1 bekannt, von der die vorliegende Erfindung ausgeht. Das bekannte Zusatzelement erlaubt jedoch nur die Verwendung von Versorgungsaggregaten bis zu einer bestimmten Größe und Leistung. Versorgungselemente für Anwendungsfälle, bei denen höhere Leistungen verlangt werden, sind aus Platzgründen nicht in ein Kraftfahrzeug zu integrieren.

Der Erfindung liegt daher das technische Problem zugrunde, ein Zusatzelement gemäß dem Oberbegriff des Anspruchs 1 bereitzustellen, das möglichst platzsparend über eine Gelenkwelle mit dem Getriebe eines Kraftfahrzeugs verbunden werden kann.

Dieses technische Problem wird durch ein Zusatzelement mit den Merkmalen des Anspruchs 1 gelöst.

Erfindungsgemäß ist erkannt worden, dass durch diese spezielle Anordnung des Winkelgetriebes relativ zur Antriebswelle zusammen mit dem Zugmittelgetriebe die Gelenkwelle nahezu vollständig innerhalb des durch die restlichen Teile des Zusatzelementes eingenommenen Raumes verläuft und nicht seitlich darüber oder daneben hinausragt. Es bleibt damit gewährleistet, dass die Gelenkwelle eine hinreichende Länge hat, um den Abstand des Abtriebsflansches und des Eingangsgliedes senkrecht zu der Drehachse des Abtriebsflansches zu überbrücken, ohne dass der Beugungswinkel einen kritischen Bereich größer 10°, insbesondere größer 15°, erreicht.

Dadurch, dass die Antriebswelle des Versorgungsaggregats senkrecht zum Abtriebsflansch des Getriebes, also quer zur Drehachse des Abtriebsflansches angeordnet ist und damit senkrecht zur Fahrtrichtung steht, ist ein platzsparender Einbau des Versorgungsaggregats möglich. Der durch das Zusatzelement eingenommene Raum kann minimiert werden, da die Längserstreckung des Versorgungsaggregates in der Regel größer als die Quererstreckung ist.

Durch eine Variation der Länge der Antriebswelle des Versorgungsaggregats und der Länge des Zugmittels (Riemen, Kette) kann zudem in einfacher Weise das Zusatzelement an die baulichen Gegebenheiten unterschiedlicher Fahrzeugtypen angepasst werden.
Das Zugmittelgetriebe als Riemengetriebe mit einer ersten Riemenscheibe und einer zweiten, mit der Antriebswelle verbundenen Riemenscheibe auszubilden, führt zunächst zu einer einfachen und damit kostengünstigen Lösung. Außerdem kann das Zusatzelement durch Längenänderung des Keilriemens oder Zahnriemens leicht an unterschiedliche Fahrzeugtypen angepasst werden.

Ist ein großer Kraftschluss zwischen dem Getriebe auf der einen Seite und dem Zusatzelement auf der anderen Seite erforderlich, kann das Zugmittelgetriebe auch als ein Kettengetriebe ausgebildet sein.

Die in dem Zusatzelement angeordneten Versorgungsaggregate können ein Kompressor, eine Pumpe, insbesondere Hydraulikpumpe sowie ein Generator sein.

Insbesondere bei hohen Drehzahlen ist es vorteilhaft, wenn an der dem Eingangsglied des Winkelgetriebes gegenüberliegenden Seite ein Lüfterrad vorgesehen ist, das mit angetrieben wird. Damit wird das Getriebe gekühlt um zu verhindern, dass die Temperatur des Getriebeöls einen kritischen Wert überschreitet und das Winkelgetriebe Schaden nimmt.

Um eine hinreichende Kühlung des Getriebeöls zu gewährleisten, ist es außerdem vorteilhaft, dass Gehäuse des Winkelgetriebes mit Kühlrippen zu versehen.

Um große Belastungen der Antriebswelle senkrecht zu ihrer Erstreckungsrichtung zu vermeiden und zwar insbesondere dann, wenn diese eine große Länge aufweist, ist es vorteilhaft, ein Lager nahe des Zugmittelgetriebes vorzusehen.

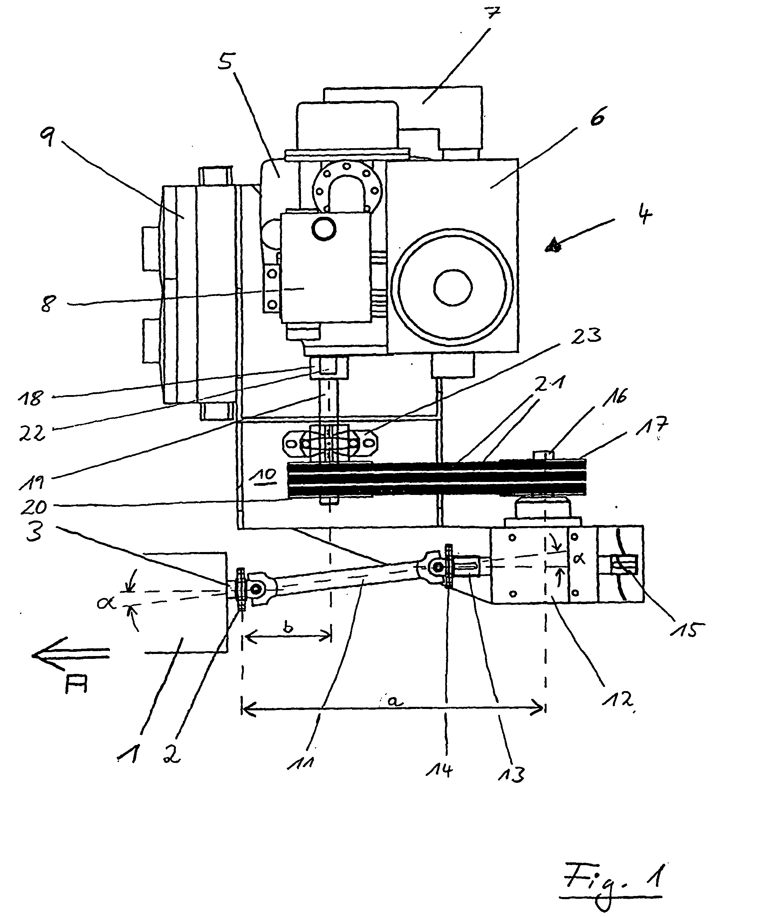

Die vorliegende Erfindung wird nachfolgend anhand einer nur ein bevorzugtes Ausführungsbeispiel darstellenden Zeichnung erläutert. Dabei zeigt die
- Fig. 1: die Draufsicht auf ein erfindungsgemäßes Zusatzelement.

In der Fig. 1 ist schematisch ein Getriebe 1 eines Lastkraftwagens gezeigt mit einem Abtriebsflansch 2, der auf dem Ende einer Abtriebswelle 3 vorgesehen ist. Die mit dem Abtriebsflansch 2 versehene Abtriebswelle 3 verläuft in einer Richtung parallel zur Fahrtrichtung des Lastkraftwagens. Seitlich versetzt zu dem Getriebe 1 ist das Zusatzelement 4 vorgesehen, das als Versorgungsaggregat einen Kompressor 5 aufweist. Bei dem Versorgungsaggregat kann es sich auch um eine Pumpe, eine Hydraulikpumpe oder einen Generator handeln. Der Kompressor 5 ist zusammen mit einem Luftfilter 6, einem Ansaugdämpfer 7, einem Druckschalldämpfer 8 und einem Luft-Luftkühler 9 auf einer Kompressorkonsole 10 angeordnet.

Das Zusatzelement 4 weist eine Gelenkwelle 11 und ein Winkelgetriebe 12 auf. Das eine Ende der Gelenkwelle 11 ist mit dem Abtriebsflansch 2 des Getriebes 1 verbunden und das andere Ende der Gelenkwelle 11 ist mit dem Eingangsglied 13 des Winkelgetriebes 12 über einen Flansch 14 verbunden, wobei die Gelenkwelle 11 sowohl mit der Abtriebswelle 3 als auch mit dem Eingangsglied 13 des Winkelgetriebes 12 einen Beugungswinkel α einschließt.

Der Beugungswinkel α ist dabei so gewählt, dass er 15° und insbesondere 10° nicht überschreitet. Durch die Gelenkwelle 11 wird eine schwingungstechnische Entkoppelung von Zusatzelement 4 und Motorblock einschließlich Getriebe 1 erreicht. Außerdem wird durch die Gelenkwelle 11 eine einfache Montage des Zusatzelements 4 an einem Lastkraftwagen ermöglicht.

An der dem Eingangsglied 13 gegenüberliegenden Seite des Winkelgetriebes 12 ist ein Lüfterrad 15 vorgesehen, das derart mit dem Eingangsglied 13 verbunden ist, dass es bei einer Drehung des Eingangsgliedes 13 mitdreht und dafür sorgt, dass das Winkelgetriebe 12 gekühlt wird. Außerdem weist das Winkelgetriebe 12 ein Ausgangsglied 16 auf, das in die Richtung des Kompressors 5 weist und damit senkrecht zur Abtriebswelle 3 und dem Abtriebsflansch 2 steht. Auf dem Ausgangsglied 16 ist eine erste Riemenscheibe 17 vorgesehen.

Mit dem Kompressor 5 über eine Kupplung 18 verbunden ist eine Antriebswelle 19, wobei die Antriebswelle 19 eine Drehbewegung auf den Kompressor 5 übertragen kann. Die Drehachse der Antriebswelle 19 steht senkrecht zur Abtriebswelle 3 und damit auch senkrecht zur Drehachse des Abtriebsflansches 2. Außerdem sind der Abtriebsflansch 2, das Ausgangsglied 16 des Winkelgetriebes 12 und die Antriebswelle 19 derart relativ zueinander angeordnet, dass der Abstand a der Drehachse des Ausgangsgliedes 16 vom Abtriebsflansch 2 größer ist, als der Abstand b der Drehachse der Antriebswelle 19 vom Abtriebsflansch 2.

Auf dem von dem Kompressor 5 abgewandten Ende der Antriebswelle 19 ist eine zweite Riemenscheibe 20 vorgesehen, wobei die erste Riemenscheibe 17 und die zweite Riemenscheibe 20 über drei Keilriemen 21 miteinander verbunden sind. Die erste und die zweite Riemenscheibe 17 und 20 und die Keilriemen 21 bilden damit ein Zugmittelgetriebe, durch das das Ausgangsglied 16 und die Antriebswelle 19 miteinander verbunden sind. Alternativ kann das Zugmittelgetriebe auch als Kettengetriebe ausgebildet sein, wobei statt der Riemenscheiben 17, 20 Kettenräder vorgesehen sind, die über wenigstens eine Kette miteinander verbunden sind.

Durch das Zugmittelgetriebe kann der Abstand zwischen Abtriebsflansch 2 und Antriebswelle 19 an unterschiedliche Fahrzeugtypen in der Weise angepasst werden, dass die Länge des Zugmittels (Keilriemen 21) variiert wird.

Das Ausgangsglied 16 liegt aus Sicht des Getriebes 1 gesehen hinter der Antriebswelle 19. Bei dieser Anordnung des Winkelgetriebes 12 relativ zur Antriebswelle 19 zusammen mit dem aus Riemenscheiben 17, 20 und Keilriemen 21 gebildeten Zugmittelgetriebe verläuft die Gelenkwelle 11 nahezu vollständig innerhalb des durch die restlichen Teile des Zusatzelementes 4 eingenommenen Raumes. Außerdem hat die Gelenkwelle 11 eine hinreichende Länge, um den Abstand des Abtriebsflansches 2 und des Eingangsgliedes 13 senkrecht zur Abtriebswelle 3 zu überbrücken, ohne dass der Beugungswinkel α einen kritischen Bereich oberhalb von 10° erreicht.

Durch das Winkelgetriebe 12 und das Zugmittelgetriebe kann die Welle 22 des Kompressors 5 senkrecht zur Abtriebswelle und damit senkrecht zur Fahrtrichtung (Pfeil A) verlaufen. Dies ermöglicht den Einbau des Kompressors 5 senkrecht zur Fahrtrichtung A, was zu einer weiteren Platzersparnis führt, da die Längserstreckung des Kompressors 5 geringer als die Quererstreckung ist.

Auf der Kompressorkonsole 10 ist außerdem ein Lager 23 für die Antriebswelle 19 vorgesehen, durch das die Antriebswelle 19 nahe der zweiten Riemenscheibe 20 gelagert wird, um Belastungen senkrecht zur Antriebswelle 19 aufgrund der Spannung der Keilriemen 21 zu vermeiden.

Wird das Getriebe 1 derart betätigt, dass sich die Abtriebswelle 3 und der Abtriebsflansch 2 drehen, überträgt die Gelenkwelle 11 die Drehbewegung auf das Winkelgetriebe 12, dessen Ausgangsglied 15 ebenfalls in Drehung versetzt wird. Über das Zugmittelgetriebe gebildet aus den Riemenscheiben 17, 20 und den Keilriemen 21 wird die Drehbewegung auf die Antriebswelle 19 übertragen und damit der Kompressor 5 angetrieben.

## Patentansprüche

1. Zusatzelement (4) für ein Kraftfahrzeug, das einen Motor und ein einen Abtriebsflansch (2) aufweisendes Getriebe (1) aufweist,
- mit einem Versorgungsaggregat (5),
- mit einer Gelenkwelle (11),
- mit einem Winkelgetriebe (12),
- mit einem Zugmittelgetriebe (17, 20, 21) und
- mit einer Antriebswelle(19),
- wobei die Antriebswelle(19) eine Drehbewegung auf das Versorgungsaggregat (5) überträgt,
- wobei das Winkelgetriebe (12) und das Zugmittelgetriebe (17, 20, 21) die Drehbewegung der Gelenkwelle (11) auf die Antriebswelle (19) übertragen,
- wobei die Drehachse des Abtriebsflansches (2) und die Drehachse der Antriebswelle (19) im Wesentlichen senkrecht zueinander ausgerichtet und beabstandet zueinander angeordnet sind und
- wobei der Abstand (a) der Drehachse des Ausgangsglieds (16) des Winkelgetriebes (12) vom Abtriebsflansch (2) größer als der Abstand (b) der Drehachse der Antriebswelle (19) vom Abtriebsflansch (2) ist,
**dadurch gekennzeichnet,**
- **dass** die Gelenkwelle (11) das Getriebe (1) mit dem Eingangsglied (13) des Winkelgetriebes (12) verbindet und
- **dass** die Antriebswelle (19) und das Ausgangsglied (16) des Winkelgetriebes (12) über ein Zugmittelgetriebe (17, 20, 21) miteinander verbunden sind.

2. Zusatzelement nach Anspruch 1,
**dadurch gekennzeichnet,**
**dass** das Zugmittelgetriebe (17, 20, 21) als Riemengetriebe ausgebildet ist.

3. Zusatzelement nach Anspruch 2,
**dadurch gekennzeichnet,**
**dass** das Riemengetriebe am Ausgangsglied (16) des Winkelgetriebes (12) eine erste Riemenscheibe (17) und auf der Antriebswelle (19) eine zweite Riemenscheibe (20) aufweist.

4. Zusatzelement nach Anspruch 3,
**dadurch gekennzeichnet,**
**dass** die erste und die zweite Riemenscheibe (17, 20) mit mindestens einem Keilriemen (21) miteinander verbunden sind.

5. Zusatzelement nach Anspruch 3,
**dadurch gekennzeichnet,**
**dass** die erste und die zweite Riemenscheibe (17, 20) mit mindestens einem Zahnriemen miteinander verbunden sind.

6. Zusatzelement nach Anspruch 1,
**dadurch gekennzeichnet,**
**dass** das Zugmittelgetriebe als Kettengetriebe ausgebildet ist.

7. Zusatzelement nach Anspruch 6,
**dadurch gekennzeichnet,**
**dass** das Kettengetriebe am Ausgangsglied (16) des Winkelgetriebes (12) ein erstes Kettenrad und auf der Antriebswelle (19) ein zweites Kettenrad aufweist.

8. Zusatzelement nach Anspruch 7,
**dadurch gekennzeichnet,**
**dass** das erste und das zweite Kettenrad mit mindestens einer Kette miteinander verbunden sind.

9. Zusatzelement nach einem der Ansprüche 1 bis 8,
**dadurch gekennzeichnet,**
**dass** das Versorgungsaggregat als Kompressor (5) ausgebildet ist.

10. Zusatzelement nach einem der Ansprüche 1 bis 8,
**dadurch gekennzeichnet,**
**dass** das Versorgungsaggregat als Pumpe, insbesondere Hydraulikpumpe, ausgebildet ist.

11. Zusatzelement nach einem der Ansprüche 1 bis 8,
**dadurch gekennzeichnet,**
**dass** das Versorgungsaggregat als Generator ausgebildet ist.

12. Zusatzelement nach einem der Ansprüche 1 bis 11,
**dadurch gekennzeichnet,**
**dass** das Winkelgetriebe (12) an der dem Eingangsglied (13) gegenüberliegenden Seite ein Lüfterrad (15) aufweist.

13. Zusatzelement nach einem der Ansprüche 1 bis 12,
**dadurch gekennzeichnet,**
**dass** das Winkelgetriebe (12) Kühlrippen aufweist.

14. Zusatzelement nach einem der Ansprüche 1 bis 13,
**dadurch gekennzeichnet,**
**dass** der Beugungswinkel α der Gelenkwelle (11) kleiner als 15° ist, vorzugsweise kleiner 10° ist.

15. Zusatzelement nach einem der Ansprüche 1 bis 14,
**dadurch gekennzeichnet,**
**dass** ein Lager (23) für die Antriebswelle (19) nahe dem Zugmittelgetriebe vorgesehen ist.

## Claims

1. Auxiliary element (4) for a motor vehicle, which has an engine and a gearing (1) having an output flange (2),
- with a supply for an auxiliary (5),
- with a cardan shaft (11),
- with an angular gear (12),
- with a traction gear (17, 20, 21) and
- with a drive shaft (19),
- wherein the drive shaft (19) imparts a rotational movement to the supply for an auxiliary (5),
- wherein the angular gear (12) and the traction gear (17, 20, 21) impart the rotational movement of the cardan shaft (11) to the drive shaft (19),
- wherein the rotational axis of the output flange (2) and the rotational axis of the drive shaft (19) are aligned essentially perpendicular to each other and spaced apart, and
- wherein the distance (a) between the rotational axis of the output unit (16) of the angular gear (12) and the output flange (2) is greater than the distance (b) between the rotational axis of the drive shaft (19) and the output flange (2),
- **characterised in that**
- the cardan shaft (11) links the gearing (1) with the input unit (13) of the angular gear (12)
- that the drive shaft (19) and the output unit (16) of the angular gear (12) are connected together by a traction gear (17, 20, 2 1).

2. Auxiliary element according to claim 1,
**characterised in that**
the traction gear (17, 20, 21) is a belt gearing.

3. Auxiliary element according to claim 2,
**characterised in that** the belt gearing on the output unit (16) of the angular gear (12) has a first pulley (17) while a second pulley (20) is accommodated on the drive shaft (19).

4. Auxiliary element according to claim 3,
**characterised in that** the first and the second pulley (17, 20) are linked together with at least one V-belt (21).

5. Auxiliary element according to claim 3,
**characterised in that** the first and the second pulley (17, 20) are linked together with at least one toothed belt.

6. Auxiliary element according to claim 1,
**characterised in that**
the traction gear (17, 20, 21) is a chain gearing.

7. Auxiliary element according to claim 6,
**characterised in that**
the chain gearing has a first chain wheel on the output unit (16) of the angular gear (12) and a second chain wheel on the drive shaft (19).

8. Auxiliary element according to claim 7,
**characterised in that**
the first and second chain wheel are linked together with at least one chain.

9. Auxiliary element according to one of claims 1 to 8,
**characterised in that**
the supply for an auxiliary is a compressor (5).

10. Auxiliary element according to one of claims 1 to 8,
**characterised in that**
the supply for an auxiliary is a pump, in particular a hydraulic pump.

11. Auxiliary element according to one of claims 1 to 8,
**characterised in that**
the supply for an auxiliary is a generator.

12. Auxiliary element according to one of claims 1 to 11,
**characterised in that**
the angular gear (12) has a fan blade (15) on the side lying opposite the input unit (13).

13. Auxiliary element according to one of claims 1 to 12,
**characterised in that**
the angular gear (12) has cooling ribs.

14. Auxiliary element according to one of claims 1 to 13,
**characterised in that**
the diffraction angle α of the cardan shaft (11) is smaller than 15°, preferably smaller [than] 10°.

15. Auxiliary element according to one of claims 1 to 14,
**characterised in that**
a bearing is provided for the drive shaft (19) near the traction gear.

## Revendications

1. Elément auxiliaire (4) pour un véhicule à moteur qui comprend un moteur et une boite de vitesses (1) comportant une flasque d'entraînement (2), lequel comprend :
- un dispositif d'alimentation (5) ;
- un arbre de transmission à cardan (11) ;
- un engrenage conique (12) ;
- une transmission de type traction (17, 20, 21) ; et
- un arbre d'entraînement (19) ;
- dans lequel l'arbre d'entraînement (19) transmet un mouvement de rotation au dispositif d'alimentation (5) ;
- dans lequel l'engrenage conique (12) et la transmission de type traction (17, 20, 21) transmettent le mouvement de rotation de l'arbre de transmission à l'arbre d'entraînement (19) ;
- dans lequel l'axe de rotation de la flasque d'entraînement (2) et l'axe de rotation de l'arbre d'entraînement (19) sont essentiellement perpendiculaires l'un à l'autre et espacés l'un de l'autre ; et
- dans lequel la distance (a) entre l'axe de rotation de l'élément de sortie (16) de l'engrenage conique et la flasque d'entraînement (2) est plus importante que la distance (b) entre l'axe de rotation de l'arbre d'entraînement (19) et la flasque d'entraînement (2) ;
**caractérisé en ce que** :
- l'arbre de transmission à cardan (11) relie la boite de vitesses (1) à l'élément d'entrée (13) de l'engrenage conique (12) ; et **en ce que**
- l'arbre d'entraînement (19) et l'élément de sortie (16) de l'engrenage conique (12) sont connectés l'un à l'autre par le biais d'une transmission de type traction (17, 20, 21).

2. Elément auxiliaire selon la revendication 1, **caractérisé en ce que** la transmission de type traction (17, 20, 21) consiste en une transmission à courroie.

3. Elément auxiliaire selon la revendication 2, **caractérisé en ce que** la transmission à courroie comprend une première poulie à courroie (17) au niveau de l'élément de sortie (16) de l'engrenage conique (12) et une seconde poulie à courroie (20) sur l'arbre d'entraînement (19).

4. Elément auxiliaire selon la revendication 3, **caractérisé en ce que** les première et seconde poulies à courroie (17, 20) sont reliées par au moins une courroie trapézoïdale (21).

5. Elément auxiliaire selon la revendication 3, **caractérisé en ce que** les première et seconde poulies à courroie (17, 20) sont reliées par au moins une courroie dentée.

6. Elément auxiliaire selon la revendication 1, **caractérisé en ce que** la transmission de type traction consiste en une transmission par chaîne.

7. Elément auxiliaire selon la revendication 6, **caractérisé en ce que** la transmission par chaîne comprend un premier pignon à chaîne au niveau de l'élément de sortie (16) de l'engrenage conique (12) et un second pignon à chaîne au niveau de l'arbre d'entraînement (19).

8. Elément auxiliaire selon la revendication 7, **caractérisé en ce que** les premier et second pignons à chaîne sont reliés par au moins une chaîne.

9. Elément auxiliaire selon l'une des revendications 1 à 8, **caractérisé en ce que** le dispositif d'alimentation consiste en un compresseur (5).

10. Elément auxiliaire selon l'une des revendications 1 à 8, **caractérisé en ce que** le dispositif d'alimentation consiste en une pompe, et notamment une pompe hydraulique.

11. Elément auxiliaire selon l'une des revendications 1 à 8, **caractérisé en ce que** le dispositif d'alimentation consiste en un générateur.

12. Elément auxiliaire selon l'une des revendications 1 à 11, **caractérisé en ce que** l'engrenage conique (12) comporte une roue de ventilation (15) sur le côté opposé à l'élément d'entrée (13).

13. Elément auxiliaire selon l'une des revendications 1 à 12, **caractérisé en ce que** l'engrenage conique (12) comporte des ailettes de refroidissement.

14. Elément auxiliaire selon l'une des revendications 1 à 13, **caractérisé en ce que** l'angle d'écartement α de l'arbre de transmission à cardan (11) est inférieur à 15 ° et, de préférence, inférieur à 10°.

15. Elément auxiliaire selon l'une des revendications 1 à 14, **caractérisé en ce qu'**un palier (23) pour l'arbre d'entraînement (19) est monté à proximité de la transmission de type traction.
